# EUROPÄISCHE PATENTSCHRIFT

(11) **EP 2 699 861 B1**
(45) Veröffentlichungstag und Bekanntmachung des Hinweises auf die Patenterteilung: **10.10.2018**
(21) Anmeldenummer: 12715592.7
(22) Anmeldetag: 05.04.2012
(51) Int. Cl.: F27B 3/28, F27D 21/00, G01G 21/23, G01L 1/26

(54) **LAGERPUNKTVORRICHTUNG FÜR EINE WÄGEEINRICHTUNG**
BEARING POINT DEVICE FOR A WEIGHING DEVICE
DISPOSITIF DE POINT DE PORTÉE POUR UN INSTRUMENT DE PESAGE

(30) Priorität: 18.04.2011 DE 102011017443
(43) Veröffentlichungstag der Anmeldung: 26.02.2014
(73) Patentinhaber: Schenck Process Europe GmbH, 64293 Darmstadt (DE)
(72) Erfinder: SCHNELLBÄCHER, Roland, 64686 Lautertal (DE); RETTIG, Manfred, 64367 Mühltal (DE)
(86) Internationale Anmeldenummer: PCT/EP2012/001516
(87) Internationale Veröffentlichungsnummer: WO 2012/143094

(56) Entgegenhaltungen:
- WO-A1-2009/095457
- DE-U1-202010 003 092
- JP-A- 57 082 719
- US-A- 3 915 248
- US-A- 4 666 006

## Beschreibung

Die vorliegende Erfindung betrifft eine Lagerpunktvorrichtung und eine Wägeeinrichtung zum Verwiegen eines auf einer schwenkbaren Bodenfläche aufsetzbaren Lastelementes, die insbesondere zur Überwachung der Befüllung und Entleerung eines Schmelzofens geeignet sind.

Bei metallurgischen Schmelzprozessen zum Beispiel bei der Stahlerzeugung werden oftmals schwenkbare Schmelzöfen mit wechselbaren Ofengefäßen verwendet, die auch während eines Schmelzprozesses mit Schmelzgut zum Beispiel als Feststoff beschickt werden können. Für ein optimales Einschmelzen eines Feststoffes, der insbesondere einer bereits im Ofengefäß befindlichen Flüssigphase zugeführt wird, ist eine Kontrolle der jeweils zugeführten Menge bzw. Masse des Schmelzgutes erforderlich, um unter anderem die Schmelzzeit und die zugeführte Energie für den Schmelzprozess regulieren zu können.

Die schwenkbare Lagerung des wechselbaren Ofengefäßes, die über eine auf Rollen oder auf Gleitlagern gelagerten Schwenkbühne erfolgen kann, ermöglich einen Abstich des geschmolzenen Materials nach dem Schmelzprozesses.

Für eine optimale Prozessführung ist eine kontinuierliche Überwachung der Befüllung und Entleerung des Ofengefäßes beziehungsweise eine direkte Erfassung des im Ofengefäß vorhandenen Schmelzgutes erforderlich.

Die direkte Erfassung des im Ofengefäß vorhandenen Schmelzgutes kann zum Beispiel wiegetechnisch über eine Anzahl von Gewichtserfassungsmitteln erfolgen, die zwischen dem Ofengefäß und einem tragenden Gestell des Schmelzofens angeordnet sind.
Eine entsprechende Anlage zur Messung und zur Kontrolle der kontinuierlichen Beschickung eines Schmelzofens durch Wiegen ist beispielsweise aus der DE 10 2005 023 133 A1 oder der DE 20 2010 003 092 U1 bekannt. In der DE 10 2005 023 133 A1 wird vorgeschlagen, die entsprechenden Gewichtserfassungsmittel bevorzugt auf der Oberfläche der Schwenkbühne des Schmelzofens anzuordnen, auf der ein jeweiliges wechselbares Ofengefäß aufgesetzt werden kann. Diese Anordnung der Gewichtserfassungsmittel ermöglicht ein Wiegen des Ofengefäßes mit dem beinhalteten Schmelzgut, wobei das Gewicht des Ofengefäßes als bekannte Größe tarierbar ist.
Die Gewichtserfassungsmittel sind als Messrollen, d.h. als Tragrollen mit einer Wägezelle ausgebildet, die als Lager und somit als Krafteinleitungspunkte zum Aufsetzen eines Ofengefäßes auf der Oberfläche der Schwenkbühne angebracht sind. Die Aufgabe dieser Tragrollen ist es, die thermischen Ausdehnungen des Ofengefäßes während des Schmelzprozesses gegenüber der Oberfläche der Schwenkbühne auszugleichen. Die in der DE 10 2005 023 133 A1 beschriebene Anlage ermöglicht bei einer waagerecht ausgerichteten Schwenkbühne, d.h. in nichtgeschwenkter Stellung, eine Wiegung des gefüllten Ofengefäßes und damit eine Kontrolle einer kontinuierlichen Schmelzgutbeschickung.
Nachteilig an dem Stand der Technik ist, dass ein auf Rollen beweglich gelagertes Ofengefäß beim Schwenken auf der Oberfläche der Schwenkbühne verrutschen kann, wobei ein Abrutschen des Ofengefäßes von der Schwenkbühne durch einen Anschlag verhindert werden kann. Der Kraftnebenschluss, der beim Verrutschen gegen die Anschläge infolge des Schwenkens auftritt, werden die Messergebnisse der Gewichtserfassung verfälscht. Ein kontrolliertes Entleeren des Ofengefäßes mit gleichzeitiger Erfassung der abfließenden Menge d.h. der Masse des Schmelzguts ist nur unter teils erheblichen Messungenauigkeiten möglich.

Die vorliegende Erfindung hat sich daher die Aufgabe gestellt, allgemein einen Weg zur Gewichtskontrolle für ein wechselbares Lastelement aufzuzeigen, mit dem die bei einer Schrägstellung bedingten-Querkräfte während des Wiegens kraftnebenschlussfrei aufgenommen werden können. Ein einfaches Wechseln eines Lastelements, das auf einer schwenkbaren Bodenfläche aufsetzbar ist, soll gewährleistet bleiben.
Diese Aufgabe wird durch eine Lagerpunktvorrichtung gemäß dem unabhängigen Anspruch 1. Bevorzugte Weiterbildungen der Erfindung sind Gegenstand der Unteransprüche.
Eine erfindungsgemäße Lagerpunktvorrichtung für eine Wägeeinrichtung ist für einen Wiegevorgang zwischen einer schwenkbaren Bodenfläche und einem zu wiegenden Lastelement angeordnet, wobei das Lastelement wechselbar ist und zum Wiegen auf dieser Bodenfläche aufgesetzt werden kann.
Die Lagerpunktvorrichtung umfasst eine Wägezelle mit einem Lasteinleitungsteil sowie einer Aufnahmevorrichtung. Die Wägezelle ist zum Anbringen an der schwenkbaren Bodenfläche vorgesehen und die Aufnahmevorrichtung ist zum Anbringen an einem jeweiligen zuwiegenden wechselbaren Lastelement geeignet. Das Lasteinleitungsteil an der Wägezelle und die Aufnahmevorrichtung sind dazu ausgebildet, beim Aufsetzen des Lastelements auf die Bodenfläche jeweils ineinander einzugreifen.

Die Erfindung stellt somit eine zweiteilig ausgebildete Lagerpunktvorrichtung vor, die durch das Ineinandergreifen von Lasteinleitungsteil und Aufnahmevorrichtung einen definierten Kraftübertragungspunkt bereitstellt. Neben der in vertikaler Richtung wirkenden Gewichtskraft können somit auch die seitlichen Führungskräfte, die bei einer um eine horizontale Achse geschwenkten, d.h. nicht waagerecht ausgerichteten Bodenfläche zwischen einem Lastelement und der Bodenfläche wirken, über den Kraftübertragungspunkt in die Wägezelle eingeleitet werden. Ein Kraftnebenschluss der über einen seitlichen Anschlag wirken würde, wird mit dem definierten Kraftübertragungspunkt wirksam unterdrückt.

Das Lasteinleitungsteil kann eine kalottenförmige Oberfläche aufweisen, die beim Aufsetzen des wechselbaren Lastelements auf die Bodenfläche in eine komplementäre insbesondere kugelschalenförmige Aufnahmeöffnung der Aufnahmevorrichtung eingreifen kann.

Des Weiteren kann die Wägezelle einen im Wesentlichen rotationssymmetrischen zylindrischen Messkörper aufweisen, der konzentrisch angeordnete Verformungsbereiche umfasst, in denen eine Anzahl Dehnungsmessstreifen appliziert sind.

Durch das kalottenförmige Lasteinleitungsteil kann die Gewichtskraft bezüglich einer Rotationsachse, die durch den Messkörper und das Lasteinleitungsteil läuft, unter einem variablen Winkel in den Messkörper eingeleitet und erfasst werden.

Eine Wägeeinrichtung, die für ein auf einer schwenkbaren Bodenfläche aufsetzbares zu wiegendes Lastelement geeignet ist, umfasst wenigstens drei Lagerpunktvorrichtungen. Diese Lagerpunktvorrichtungen umfassen jeweils eine Wägezelle und eine zugeordnete Aufnahmevorrichtung. Die Wägezellen sind zum Anbringen an der schwenkbaren Bodenfläche ausgebildet. Die zugeordneten Aufnahmevorrichtung sind zum Anbringen an dem Lastelement vorgesehen. Die Wägezellen besitzen jeweils ein Lasteinleitungsteil, wobei jedes Lasteinleitungsteil und eine jeweilig zugeordnete Aufnahmevorrichtung dazu ausgebildet sind, beim Aufsetzen des Lastelements auf die Bodenfläche ineinander einzugreifen.
Die Aufnahmevorrichtung und/oder die Wägezelle können ein Festlager und/oder ein Fest-Loslager und/oder ein Loslager umfassen, das zum Anbringen der Aufnahmevorrichtung unter dem Lastelement und/oder zum Anbringen der Wägezelle auf der Bodenfläche geeignet ist.
In bevorzugter Weise umfassen die Aufnahmevorrichtung und/oder die Wägezelle einer ersten Lagerpunktvorrichtung ein Festlager, die Aufnahmevorrichtung und/oder die Wägezelle einer zweiten Lagerpunktvorrichtung ein Fest-Loslager und die Aufnahmevorrichtung und/oder die Wägezelle einer dritten Lagerpunktvorrichtung Loslager.

Mit dem Festlager der ersten Lagerpunktvorrichtung wird das auf die Bodenfläche aufgesetzte zu wiegende Lastelement in alle Richtungen einer zur Bodenfläche parallelen Ebene fixiert. Mit dem Fest-Loslager der zweiten Lagerpunktvorrichtung kann eine mechanische Ausdehnung des zu wiegenden Lastelements in eine vorher festgelegte Richtung parallel zur Bodenfläche ausgeglichen werden, während das Lastelement orthogonal zu dieser Richtung in einer parallelen Ebene zur Bodenfläche fixiert ist. Das Loslager der dritten Lagerpunktvorrichtung ermöglicht eine freie Bewegung der Aufnahmevorrichtung bzw. der Wägezelle in der zur Bodenfläche parallelen Ebene, so dass eine mechanische Ausdehnung in zwei Richtungen ausgleichbar ist.

In bevorzugter Weise kann die Wägeeinrichtung eine vierte Lagerpunktvorrichtung umfassen, deren Aufnahmevorrichtung bzw. deren Wägezelle ein weiteres Loslager umfasst. Somit kann das zu wiegendes Lastelement auf die nicht geschwenkte Bodenfläche aufgesetzt werden, so dass das Gesamtgewicht in alle vier Lagerpunktvorrichtungen eingeleitet und von den entsprechenden Messzellen erfasst werden kann, wobei Messzellen mit einer gemeinsamen Auswerteeinrichtung in Verbindung stehen können.

Die schwenkbare Bodenfläche kann bevorzugt als Schwenkbühne und das Lastelement als ein Ofengefäß eines Schmelzofens ausgeführt sein. Die Wägezelle und die Aufnahmevorrichtung können jeweils Kühlmittelanschlüsse besitzen, um hohe Temperaturen des angrenzenden Heißbereichs von der Messzelle zu entkoppeln.

Eine erfindungsgemäße Wägeeinrichtung zeichnet sich insbesondere durch eine zweiteilige Lagerpunktvorrichtung aus, mit dem ein mit Aufnahmevorrichtungen ausgerüstetes Lastelement, z.B. ein Ofengefäß, beim Aufsetzen auf eine waagerecht ausgerichtete Schwenkbühne mit den Messzellen der Lagerpunktvorrichtungen in Eingriff gebracht werden kann.

Die kalottenförmigen Lasteinleitungsteile ermöglichen mit den entsprechend angepassten Aufnahmeöffnungen eine automatische Zentrierung zwischen den Wägezellen und der jeweilig zugeordneten Aufnahmevorrichtung, so dass ein einfacher Wechsel eines zu wiegenden Lastelements ermöglicht wird.

Das Festlager der ersten Lagerpunktvorrichtung ermöglicht in Verbindung mit dem Fest-Loslager und den Loslagern der weiteren Lagerpunktvorrichtungen ein ungehindertes mechanisches Ausdehnen eines zu wiegenden Lastelements, insbesondere bei einem Ofengefäß mit einer starken thermischen Ausdehnung.

Beim Kippen der schwenkbaren Bodenfläche, beispielsweise einer Schwenkbühne eines Schmelzofens, werden die auf die schräge Ebene einwirkenden Horizontalkräfte von zwei Lagerpunktvorrichtungen aufgenommen, d.h. von der ersten mit dem Festlager und der zweiten mit dem Fest-Loslager.

Die Erfindung wird nachfolgend anhand einer beispielhaften Ausführungsform unter Bezugnahme der beigefügten Zeichnungen detailliert beschrieben. In den Zeichnungen zeigen:
- Fig. 1:: eine perspektivische Ansicht eines Schmelzofens mit einem wechselbaren Ofengefäß, das auf einer Schwenkbühne aufgesetzt ist,
- Fig. 2:: eine schematische Draufsicht auf das Ofengefäß und die Schwenkbühne,
- Fig. 3:: eine seitlichere Ansicht einer erfindungsgemäßen Lagerpunktvorrichtung,
- Fig. 4:: einen seitlichen Querschnitt durch die erfindungsgemäße Lagerpunktvorrichtung,
- Fig. 5:: einen seitlichen Querschnitt sowie eine untere Draufsicht einer Aufnahmevorrichtung mit einem Festlager,
- Fig. 6: einen seitlichen Querschnitt sowie eine untere Draufsicht einer Aufnahmevorrichtung mit einem Loslager,
- Fig. 7:: einen seitlichen Querschnitt sowie eine untere Draufsicht einer Aufnahmevorrichtung mit einem Fest-Loslager.

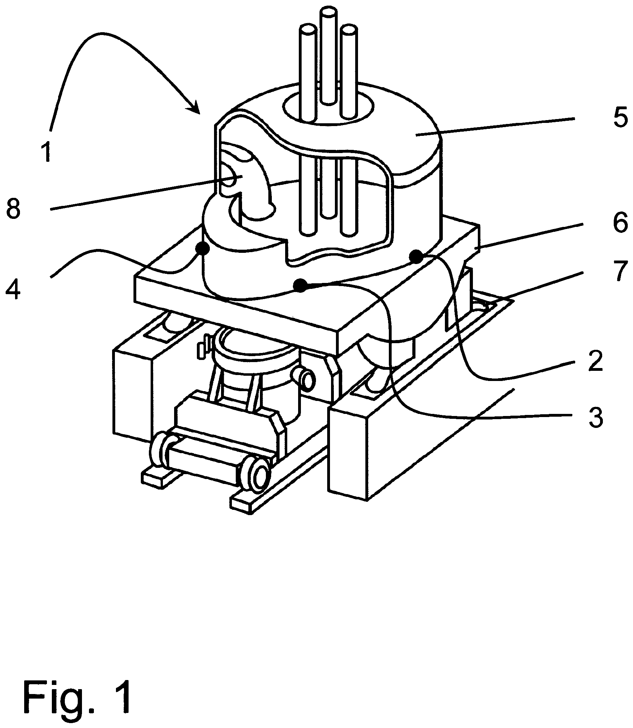

In der Figur 1 wird ein auf einer schwenkbaren Bodenfläche aufgesetztes und zu wiegendes Lastelement am Beispiel eines Schmelzofens verdeutlicht. Der dargestellte Schmelzofen umfasst ein auswechselbares Ofengefäß 5, das auf einer Schwenkbühne 6 aufgesetzt ist. Die Schwenkbühne 6 ist zum Beispiel über eine Anzahl in der Zeichnung nicht explizit dargestellter Rollen oder über Gleitlager auf einem unteren Tragwerk 7 schwenkbar gelagert.
Ein als Feststoff vorliegendes Schmelzgut kann über eine seitliche Öffnung 8 des Ofengefäßes 5 dem Schmelzprozess kontinuierlich zugeführt werden. Die Beschickung erfolgt beispielsweise über ein Förderband, das seitlich an das Ofengefäß herangeführt sein kann.

Für den Abstich einer fertigen Materialschmelze kann das Ofengefäß auf der Schwenkbühne um eine horizontale Achse geschwenkt werden. Das flüssige Material kann über eine Ausgussvorrichtung 9, die in der Perspektive der Figur 1 verdeckt ist, in ein unter dem Schmelzofen vorgesehenes Transportgefäß gegossen werden.

Für die Regelung von Energiezufuhr und Prozesszeit eines Schmelzprozesses, stellt die im Ofengefäß enthaltene Menge von flüssigem und festem Schmelzgut einen wesentlichen Parameter dar, der messtechnisch erfasst werden muss.

Die Schmelzgutmenge kann mittels Wiegen des Schmelzofens mit dem im Ofengefäß vorhandenen Schmelzgutes erfolgen. Um ein günstiges Verhältnis zwischen der fraglichen Schmelzgutmasse und einer gewogenen Gesamtmasse inklusive der Masse des Schmelzofens zu erreichen, hat sich bewährt, die zum Wiegen erforderlichen Gewichtserfassungsmittel zwischen dem Ofengefäß und der Schwenkbühne anzuordnen. In der Figur 1 ist die Lage von vier Lagerpunktvorrichtungen 1, 2, 3 und 4 angedeutet. Es sei jedoch darauf hingewiesen, dass grundsätzlich auch drei Lagerpunktvorrichtungen ausreichend sein können.

Die vier Lagerpunktvorrichtungen 1, 2, 3 und 4 gemäß dem Ausführungsbeispiel nach Fig. 1 umfassen bevorzugt jeweils eine Wägezelle. Bei waagerecht gestellter Schwenkbühne wird das Gewicht von Ofengefäß in die vier Lagerpunkte eingeleitet und durch die jeweiligen Wägezelle erfasst, wobei die Messwerte von einer nicht dargestellten Auswerteeinrichtung miteinander verrechnet werden können.

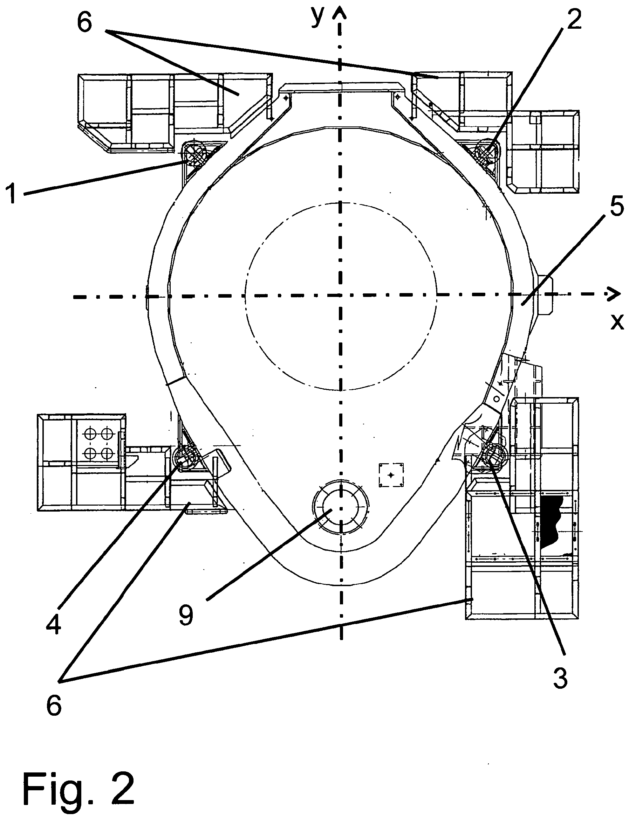

In der Figur 2 ist eine Draufsicht des Ofengefäßes 5 skizziert, das über die vier Lagerpunktvorrichtungen 1, 2, 3 und 4 auf der Schwenkbühne 6 aufgesetzt ist. Die Schwenkbühne 6 kann als eine beliebige Rahmenkonstruktion ausgeführt sein, von der nur die relevanten Bereiche für die Montage der Lagerpunktvorrichtungen dargestellt sind.

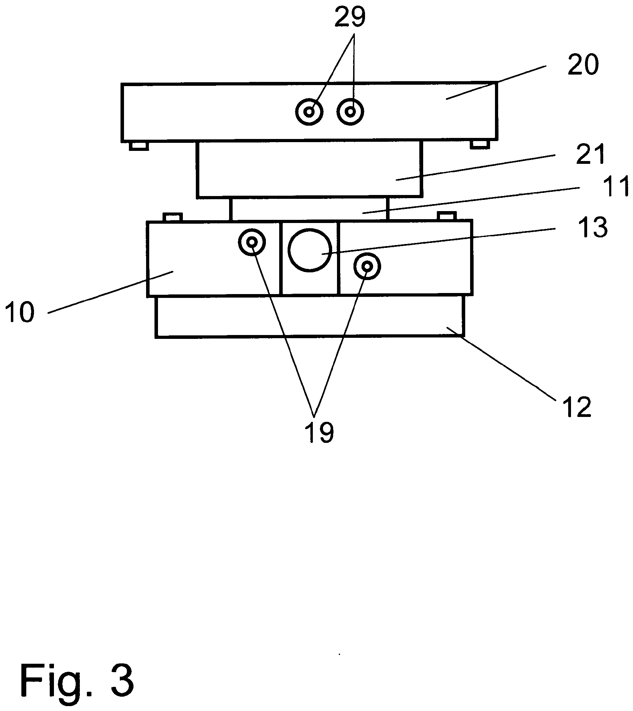

Eine seitliche Ansicht einer erfindungsgemäßen zweiteiligen Lagerpunktvorrichtung ist der Figur 3 zu entnehmen. Diese umfasst eine Wägezelle 10, die als ein im Wesentlichen rotationssymmetrischer zylindrischer Messkörper ausbildet ist, der konzentrisch angeordnete Verformungsbereiche mit einer Anzahl von Dehnungsmessstreifen umfassen kann. Die Wägezelle 10 kann über eine Fußplatte 12 auf der Oberseite der Schwenkbühne 6 befestigt werden. Die erfindungsgemäße Lagerpunktvorrichtung umfasst eine Aufnahmevorrichtung 21 die über ein Lager 20 an der Unterseite eines Ofengefäßes 5 befestigt werden können. Beim Aufsetzen des Ofengefäßes 5 auf die Schwenkbühne 6 greift ein auf der Kopfplatte 11 der Wägezelle 10 angeordnetes Lasteinleitungsteil 12 in eine Aufnahmeöffnung 22 auf der Unterseite der Aufnahmevorrichtung 21 ein.

Die zweiteiligen Lagerpunktvorrichtungen 1, 2, 3 und 4 stellen definierte Kraftübertragungs- und Messpunkte für das in die Schwenkbühne 6 eingeleitete Gesamtgewicht des Ofengefäßes 5 bereit.

Wegen der hohen Wärmestrahlung, die während eines Schmelzprozesses von dem Ofengefäß 5 abgegeben wird, können die Wägezelle 10 und die Aufnahmevorrichtung 21 bzw. ihre Lager 20 mit Kühlmittelanschlüssen 19 und 29 versehen werden. Über den elektrischen Anschluss 13 werden die jeweilige Wägezelle 10 der vier Lagerpunktvorrichtungen 1, 2, 3 und 4 mit der Auswerteeinrichtung verbunden.

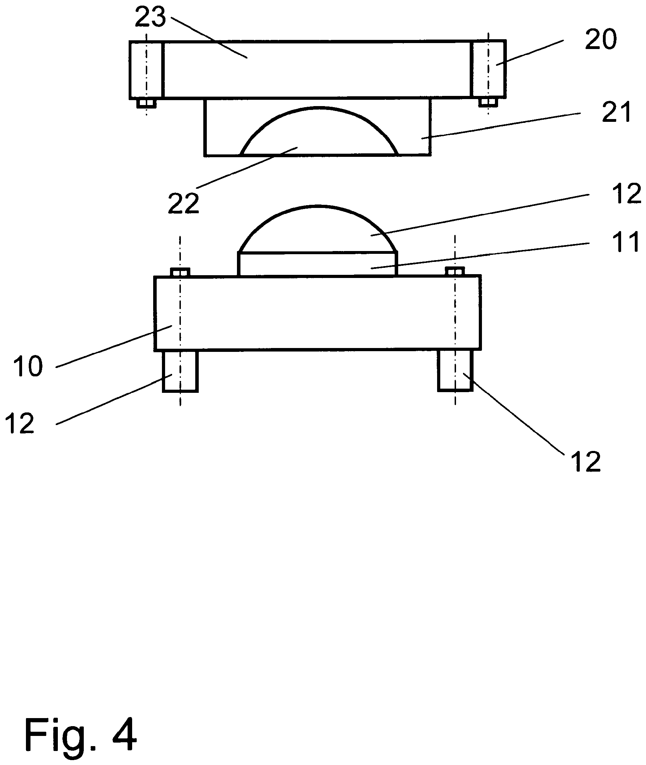

Die Figur 4 zeigt einen vertikalen Querschnitt durch eine erfindungsgemäße zweiteilige Lagepunktvorrichtung. Das Lasteinleitungsteil 12, das auf der Kopfplatte 11 der Wägezelle 10 zum Beispiel mittels einer Verschraubung befestigt sein kann, besitzt eine kalottenförmige Oberfläche. Beim Aufsetzen des Ofengefäßes 5 auf die Schwenkbühne 6 greift das kalottenförmige Lasteinleitungsteil 12 in die der Kalottenform angepasste kugelschalenförmig ausgebildete Aufnahmeöffnung 22 der Aufnahmevorrichtung 21 ein.

Um die thermischen Ausdehnungen des Ofengefäßes 5, die beim Schmelzprozess auftreten können, auszugleichen, können die Lager einer jeweiligen Lagerpunktvorrichtungen als ein Festlager, als ein Fest-Loslager bzw. als ein Loslager ausgeführt werden.

Die erste Lagerpunktvorrichtung 1 wird vorzugsweise als Festlager ausgeführt. Das Festlager fixiert das Ofengefäß 5 in die beiden Richtungen einer von der Schwenkbühne 6 aufgespannten Ebene, die in der Figur 1 als x- und y-Richtungen bezeichnet sind. Die zweite Lagerpunktvorrichtung 2 wird als Fest-Loslager dargestellt, das in x-Richtungen verschiebbar ist und somit eine Ausdehnung in x-Richtung ermöglicht, während der Behälter in y-Richtung fixiert wird.

Die Lager der Aufnahmevorrichtungen 21 der dritten und der vierten Lagerpunktvorrichtung 3 und 4 sind jeweils als Loslager ausgeführt und ermöglichen eine Kompensation der thermischen Ausdehnung des Ofengefäßes 5 jeweils in x- und y-Richtung.

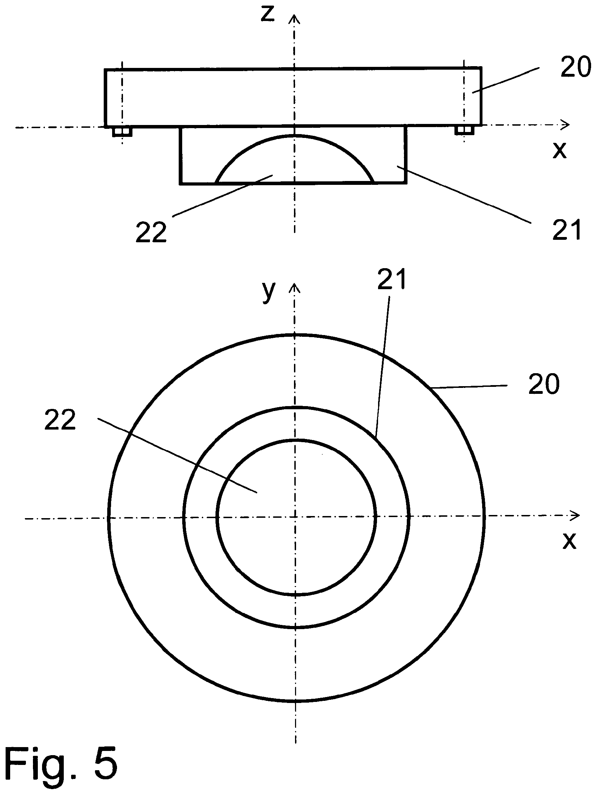

In den Figuren 5 bis 7 ist jeweils der Aufbau sowie die Funktion der verschiedenen Lager 20 für die Aufnahmevorrichtungen 21 skizziert. In dem oberen Teil der Figuren ist jeweils ein Querschnitt durch das Lager und die Aufnahmevorrichtung gezeigt, der untere Teil skizziert die Freiheitsgrade der jeweilig gelagerten Aufnahmevorrichtung.

Die Figur 5 zeigt eine Aufnahmevorrichtung 21, die über ein Festlager 201 für die erste Lagerpunktvorrichtung 1 unter dem Ofengefäß 5 befestigt werden kann. Aus dem unteren Teil der Figur 5 ist zu erkennen, dass die Aufnahmevorrichtung 21 in Bezug zum Festlager 201 in x- und y-Richtung fixiert ist.

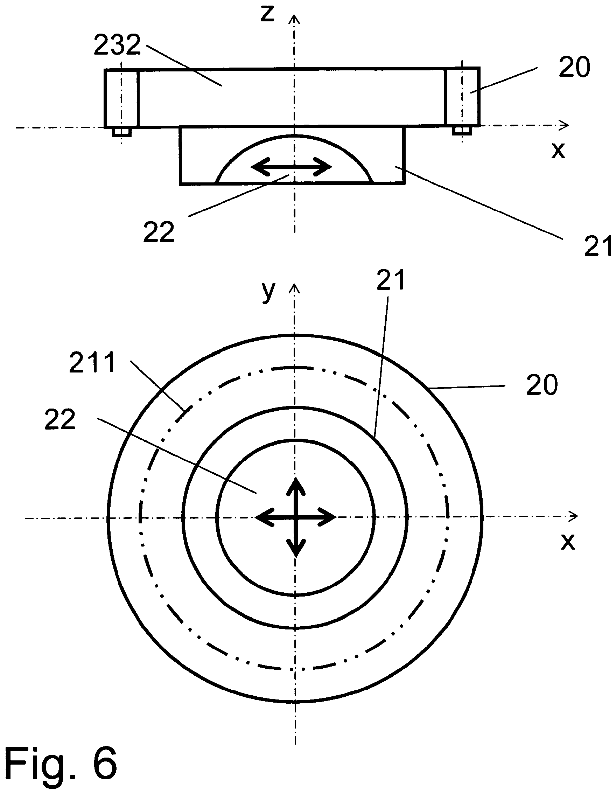

Die Figur 6 zeigt eine Aufnahmevorrichtung 21, die mit einem Loslager 202 unter dem Ofengefäß 5 befestigt werden kann und für die dritte und vierte Lagerpunktvorrichtung 3 und 4 vorgesehen ist. Die Aufnahmevorrichtung 21 ist in x- und y-Richtung innerhalb der Linie 211 beweglich gelagert, so dass thermische Ausdehnungen der Ofengefäßes 5 ausgeglichen werden können.

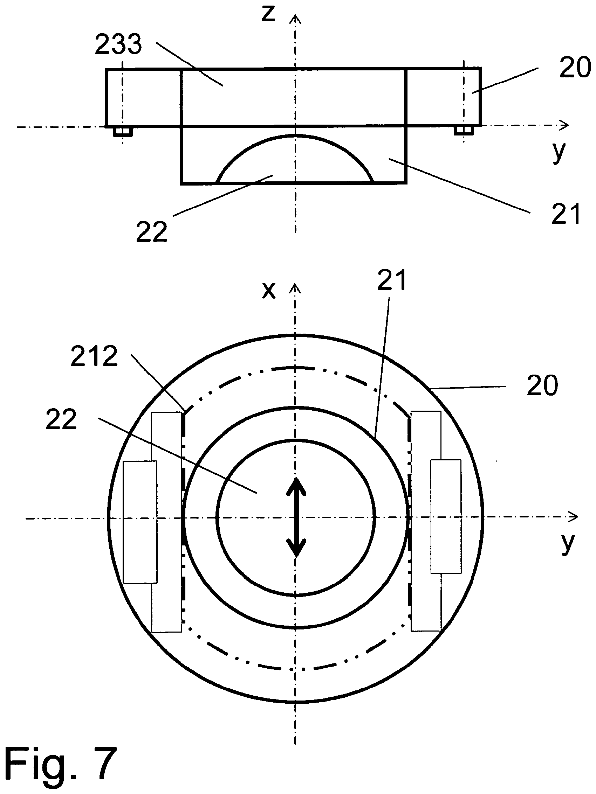

In der Figur 7 ist ein Fest-Loslager 203 dargestellt, mit dem die Aufnahmevorrichtung 21 der zweiten Lagerpunktvorrichtung 2 unter dem Ofengefäß 6 befestigt werden kann. Wie in dem unteren Teil der Figur 7 zu erkennen ist, ist die Aufnahmevorrichtung 21 in der y-Richtung fixiert und in x-Richtung innerhalb dem mit der Linie 212 gekennzeichneten Bereich verschiebbar.

Beim Aufsetzen des Ofengefäßes 5 auf die im Wesentlichen waagerecht ausgerichtete Schwenkbühne 6 greifen die auf der Schwenkbühne 6 angeordneten Lasteinleitungsteile 12 aller Lagerpunktvorrichtungen jeweils in die ihr zugeordnete Aufnahmevorrichtung 21 auf der Unterseite des Ofengefäßes 5 ein. Die kalottenförmigen Lasteinleitungsteile 12 ermöglichen im Zusammenwirken mit dem Fest-Loslager sowie den beiden Loslagern eine einfache Zentrierung der entsprechenden Aufnahmevorrichtungen, die beim Aufsetzen des Ofengefäßes 5 auf die Schwenkbühne 6 in die richtige Position gedrückt werden.

Bei einer waagerecht ausgerichteten, d.h. bei einer nicht geschwenkten Schwenkbühne 6wird die Gewichtskraft des zu wiegenden Ofengefäßes im Wesentlichen gleichmäßig über alle vier Lagepunktvorrichtungen in die Schwenkbühne eingeleitet und über die jeweilige Wägezelle 10 erfasst.

Wird die Schwenkbühne 6 um die in der Figur 2 definierte x-Achse gekippt, so werden die auftretenden Horizontalkräften von beiden in y-Richtung fixierten Lagern, d.h. dem Festlager und dem Fest-Loslager der ersten und zweiten Lagerpunktvorrichtung 1 und 2 aufgenommen und von den entsprechenden Wägezellen erfasst.

## Patentansprüche

1. Lagerpunktvorrichtung für eine Wägeeinrichtung,
- die zwischen einer schwenkbaren Bodenfläche und
- einem auf der Bodenfläche aufsetzbaren zu wiegenden Lastelement anordnenbar ist, und
- die eine Wägezelle (10) zum Anbringen an der Bodenfläche (6),
- - wobei die Wägezelle (10) ein Lasteinleitungsteil (12) besitzt und
- eine Aufnahmevorrichtung (21) zum Anbringen an dem Lastelement (5) umfasst,
- - wobei das Lasteinleitungsteil (12) und die Aufnahmevorrichtung (21) dazu ausgebildet sind, beim Aufsetzen des Lastelements auf die Bodenfläche ineinander einzugreifen,
**dadurch gekennzeichnet, dass** die Aufnahmevorrichtung (21) und/oder die Wägezelle (10) ein Loslager oder ein Fest-Loslager umfasst, das zum Anbringen der Aufnahmevorrichtung (21) unter dem Lastelement und/oder zum Anbringen der Wägezelle (10) auf der Bodenfläche geeignet ist.

2. Lagerpunktvorrichtung gemäß vorstehendem Anspruch, **dadurch gekennzeichnet, dass** das Lasteinleitungsteil (12) eine kalottenförmige Oberfläche aufweist, die beim Aufsetzen des Lastelements auf die Bodenfläche in eine komplementäre, insbesondere kugelschalenförmige Aufnahmeöffnung (22) der Aufnahmevorrichtung (21) eingreift.

3. Lagerpunktvorrichtung gemäß einem der vorstehenden Ansprüche, **dadurch gekennzeichnet, dass** die Wägezelle (10) einen im Wesentlichen rotationssymmetrischen zylindrischen Messkörper ausbildet, der konzentrisch angeordnete Verformungsbereiche umfasst, in denen eine Anzahl Dehnungsmessstreifen appliziert sind.

4. Lagerpunktvorrichtung gemäß einem der vorstehenden Ansprüche, **dadurch gekennzeichnet, dass** die Wägezelle (10) und/oder die Aufnahmevorrichtung (21) Kühlmittelanschlüsse besitzen.

5. Wägeeinrichtung für ein auf einer schwenkbaren Bodenfläche aufsetzbares zu wiegendes Lastelement,
- die wenigstens drei Lagerpunktvorrichtungen umfasst,
- wobei jede der Lagerpunktvorrichtungen gemäss Anspruch 1 ausgebildet ist.

6. Wägeeinrichtung gemäß Anspruch 5, **dadurch gekennzeichnet, dass** die Lasteinleitungsteile (12) eine kalotteförmige Oberfläche aufweisen, die beim Aufsetzen des Lastelements auf die Bodenfläche in eine komplementäre, insbesondere eine kugelschalenförmige Aufnahmeöffnung (22) der zugeordneten Aufnahmevorrichtung (21) eingreifen.

7. Wägeeinrichtung gemäß den Ansprüchen 5 oder 6, **dadurch gekennzeichnet, dass** die Aufnahmevorrichtung (21) und/oder die Wägezelle (10) einer zweiten Lagerpunktvorrichtung ein Festlager umfasst und dass die Aufnahmevorrichtung und/oder die Wägezelle einer dritten Lagerpunktvorrichtung ein Fest-Loslager oder ein Loslager umfasst, die ebenfalls zum Anbringen der Aufnahmevorrichtungen unter dem Lastelement und/oder zum Anbringen der Wägezellen auf der Bodenfläche geeignet sind.

8. Wägeeinrichtung gemäß Anspruch 7, **dadurch gekennzeichnet, dass** die eine Wägeeinrichtung eine vierte Lagerpunktvorrichtung umfasst, wobei die Aufnahmevorrichtung und/oder die Wägezelle der vierten Lagerpunktvorrichtung ein Loslager umfasst, das zum Anbringen der Aufnahmevorrichtung unter dem Lastelement und/oder zum Anbringen der Wägezelle auf der Bodenfläche geeignet ist.

9. Wägeeinrichtung gemäß einem der Ansprüche 5 bis 8, **dadurch gekennzeichnet, dass** die schwenkbare Bodenfläche eine Schwenkbühne (6) und das Lastelement ein Ofengefäß (5) ist, die Bestandteile eines Schmelzofens sind, so dass die Wägeeinrichtung eine Überwachung der Befüllung und Entleerung des Schmelzofens ermöglicht.

## Claims

1. Bearing point device for a weighing device,
- which is arranged between a pivotable floor surface and
- a load element to be weighed which can be placed on the floor surface, and
- which [sic - has?] a load cell (10) for mounting to the floor surface (6),
- - wherein the load cell (10) has a load introduction part (12) and
- comprises a receiving device (21) for mounting on the load element (5),
- - wherein the load introduction part (12) and the receiving device (21) are designed to engage with each other upon placing the load element on the floor surface,
**characterized in that** the receiving device (21) and / or the load cell (10) comprises a moveable bearing or a fixed-moveable bearing, which is suitable for mounting the receiving device (21) under the load element and / or for mounting the load cell (10) to the floor surface.

2. Bearing point device according to the preceding claim, **characterized in that** the load introduction part (12) has a dome-shaped surface which engages in a complementary, in particular ball-shaped receiving opening (22) of the receiving device (21) upon placement of the load element on the floor surface.

3. Bearing point device according to any one of the preceding claims, **characterized in that** the load cell (10) embodies an essentially rotationally symmetrical cylindrical measuring body which comprises concentrically disposed deformation zones in which a number of strain gauges are applied.

4. Bearing point device according to any one of the preceding claims, **characterized in that** the load cell (10) and / or the receiving device (21) have coolant connections.

5. Weighing device for a load element to be weighed which can be placed on a pivotable floor surface,
- which comprises at least three bearing point devices,
- wherein each of the bearing point devices is formed according to claim 1.

6. Weighing device according to claim 5, **characterized in that** the load introduction parts (12) have a dome-shaped surface, which engage in a complementary, in particular ball-shaped receiving opening (22) of the associated receiving device (21) when the load element is placed on the floor surface.

7. Weighing device according to claims 5 or 6, **characterized in that** the receiving device (21) and / or the load cell (10) of a second bearing point device comprises a fixed bearing and that the receiving device and / or the load cell of a third bearing point device includes a fixed-moveable bearing or a moveable bearing, which are also suitable for mounting the receiving devices under the load element and / or for mounting the load cells to the floor surface.

8. Weighing device according to claim 7, **characterized in that** the one weighing device comprises a fourth bearing point device, wherein the receiving device and / or the load cell of the fourth bearing point device includes a moveable bearing which is suitable for mounting the receiving device under the load element and / or for mounting the load cell to the floor surface.

9. Weighing device according to one of claims 5 to 8, **characterized in that** the pivotable floor surface is a pivoting platform (6) and the load element is a furnace vessel (5), which are components of a melting furnace so that the weighing device monitors the filling and emptying of the melting furnace.

## Revendications

1. Dispositif de palier ponctuel pour un dispositif de pesage,
- qui peut être disposé entre une surface pivotante et
- un élément de charge à peser pouvant être posé sur la surface et
- qui comprend une cellule de pesage (10) destinée à être montée sur la surface (6),
- la cellule de pesage (10) comprenant une partie d'application de la charge (12) et
- et un dispositif de logement (21) destiné à être monté sur l'élément de charge (5),
- la partie d'application de la charge (12) et le dispositif de logement (21) étant conçus pour s'emboîter entre eux lors de la pose de l'élément de charge sur la surface,
**caractérisé en ce que** le dispositif de logement (21) et/ou la cellule de pesage (10) comprend un palier libre ou un palier fixe, qui permet de monter le dispositif de logement (21) sous l'élément de charge et/ou la cellule de pesage (10) sur la surface.

2. Dispositif de palier ponctuel selon la revendication précédente, **caractérisé en ce que** la partie d'application de charge (12) comprend une surface en forme de calotte sphérique, qui s'emboîte, lors de la pose de l'élément de charge sur la surface, dans une ouverture de logement (22) complémentaire, plus particulièrement ayant la forme d'une coque sphérique, du dispositif de logement (21).

3. Dispositif de palier ponctuel selon l'une des revendications précédentes, **caractérisé en ce que** la cellule de pesage (10) constitue globalement un corps de mesure cylindrique à symétrie de rotation, qui comprend des zones de déformation disposées de manière concentrique, dans lesquelles sont apposées une pluralité de jauges de contrainte.

4. Dispositif de palier ponctuel selon l'une des revendications précédentes, **caractérisé en ce que** la cellule de pesage (10) et/ou le dispositif de logement (21) possèdent des raccords pour fluide de refroidissement.

5. Dispositif de pesage pour un élément de charge à peser pouvant être posé sur une surface pivotante,
- qui comprend au moins trois dispositifs de paliers ponctuels,
- chacun des dispositifs de paliers ponctuels étant conçu selon la revendication 1.

6. Dispositif de pesage selon la revendication 5, **caractérisé en ce que** les parties d'application de la charge (12) comprennent une surface en forme de calotte sphérique, qui s'emboîte, lors de la pose de l'élément de charge sur la surface, dans une ouverture de logement (22) complémentaire, plus particulièrement ayant la forme d'une coque sphérique, du dispositif de logement (21) correspondant.

7. Dispositif de pesage selon les revendications 5 ou 6, **caractérisé en ce que** le dispositif de logement (21) et/ou la cellule de pesage (10) d'un deuxième dispositif de palier ponctuel comprend un palier fixe et **en ce que** le dispositif de logement et/ou la cellule de pesage d'un troisième dispositif de palier ponctuel comprend un palier libre fixe ou un palier libre, qui permettent également de monter les dispositifs de logement sous l'élément de charge et/ou de monter les cellules de pesage sur la surface.

8. Dispositif de pesage selon la revendication 7, **caractérisé en ce que** le dispositif de pesage comprend un quatrième dispositif de palier ponctuel, le dispositif de logement et/ou la cellule de pesage du quatrième dispositif de palier ponctuel comprenant un palier libre qui permet de monter le dispositif de logement sous l'élément de charge et/ou de monter la cellule de pesage sur la surface.

9. Dispositif de pesage selon l'une des revendications 5 à 8, **caractérisé en ce que** la surface pivotante est un plateau pivotant (6) et l'élément de charge est un récipient ouvert (5), qui font partie d'un four de fusion, de façon à ce que le dispositif de pesage permette une surveillance du remplissage et du vidage du four de fusion.
